# EUROPEAN PATENT SPECIFICATION

(11) **EP 1 710 129 B1**
(45) Date of publication and mention of the grant of the patent: **30.05.2012**
(21) Application number: 06006785.7
(22) Date of filing: 30.03.2006
(51) Int. Cl.: B60R 21/0136, G01R 31/28, B60R 19/48, B60R 21/01, B60R 21/34

(54) **Method of testing collision load sensor for vehicle**
Verfahren zum Testen eines Kollisions-Lastsensors für Fahrzeuge
Procédé pour tester un capteur de charge de collision pour véhicule

(30) Priority: 04.04.2005 JP 2005107992
(43) Date of publication of application: 11.10.2006
(73) Proprietor: DENSO CORPORATION, Kariya-city, Aichi-pref., 448-8661 (JP); TOYOTA JIDOSHA KABUSHIKI KAISHA, Aichi-pref., 471-8571 (JP)
(72) Inventor: Otaka, Koji, c/o Denso Corporation, Kariya-City, Aichi-pref., 448-8661 (JP); Kobayashi, Shigenori, c/o Denso Corporation, Kariya-City, Aichi-pref., 448-8661 (JP); Iyoda, Motomi c/o Toyota Jidosha Kabushiki Kaisha, Toyota-city, Aichi-pref., 471-8571 (JP); Nakagawa, Yukio c/o Toyota Jidosha Kabushiki Kaisha, Toyota-city, Aichi-pref., 471-8571 (JP); Hishida, Yasuyuki, c/o Hitachi Cable, Ltd., Chiyoda-ku Tokyo 100-8166 (JP); Saito, Takahiro, c/o Hitachi Cable, Ltd., Chiyoda-ku Tokyo 100-8166 (JP)
(74) Representative: Kuhnen & Wacker

(56) References cited:
- EP-A- 1 702 812
- US-A1- 2004 210 367
- US-B1- 6 561 301

## Description

The present invention relates to a method of testing a collision load sensor for a vehicle, particularly, relates to a method of testing an optical fiber type collision detecting apparatus capable of accurately detecting a collision, such as a collision of a bumper with a pedestrian.

According to a collision detecting apparatus disclosed in Japanese Unexamined Patent Publications No. JP-A-05-116592 and No. JP-A-07-190732, an optical fiber is disposed to extend around a front face of the vehicle and a decrease of light in the optical fiber due to a collision load applied to the vehicle is detected by an optical fiber sensor having a light leak property. Further, in JP-A-05-116592, the optical fiber sensor has a cylindrical collision load transmission member having projections therein for partly increasing deflection of the optical fiber by concentrating the external collision load to predetermined positions of the optical fiber. Furthermore, JP-A-05-116592 discloses to cover the optical fiber with an elastic member such as a rubber.

In a case that such a collision detecting apparatus is arranged between a bumper reinforcement member and a front bumper of the vehicle, it is effective to quickly detect a collision, such as a collision with a pedestrian, even if the collision occurs at any positions of the front bumper. The optical fiber sensor generally has an optical fiber unit including an optical fiber and a light transmitting and receiving circuit at least. The light transmitting and receiving circuit introduces and receives the light into and from the optical fiber. The optical fiber is deformable by the collision load and therefore the amount of light transmitting in the optical fiber changes in accordance with the collision load.

To improve collision load detecting sensitivity of the optical fiber sensor, the optical fiber unit is required to be effectively deformable in a range of an allowable deformation rate against the collision load input to the optical fiber sensor. The optical fiber unit is mechanically supported by a bumper reinforcement member in front of the bumper reinforcement member, thereby to avoid the optical fiber unit from entirely moving backward by the collision load from a front side.

In consideration of a width of the front bumper in a vertical direction and easy deformability of the front bumper, a load transmission plate is disposed between the front bumper and the optical fiber unit, for concentrating the collision load inputted to the front bumper to the optical fiber unit. Therefore, the collision load inputted to the front bumper is concentrated to the load transmission plate, and then is transmitted to the bumper reinforcement member while deforming the optical fiber unit. Accordingly, the collision load inputted in the front bumper is effectively applied to the optical fiber unit.

In addition, the optical fiber of the optical fiber sensor is generally covered with an elastic member to be mechanically protected and to have recovery from a deformation due to a change of the collision load. Further, the optical fiber sensor generally has a stress concentrating plate for partly concentrating the collision load to respective portions of the optical fiber with respect to the right and left direction.

However, this kind of collision detecting apparatus is constructed of a combination of various members. Therefore, it is difficult to manufacture the apparatuses to have uniform sensitivity. It is required to test or adjust the sensitivity before the shipment. For example, in a condition that the optical fiber sensor is already mounted on a vehicle to be shipped, a test load is applied to the optical fiber sensor at respective testing points with respect to a longitudinal direction of the optical fiber sensor. However, it is likely to take long time to test the sensitivity. To reduce the time of testing, it is proposed to test the sensors by sampling inspection or to reduce the testing points in the longitudinal direction of the optical fiber sensor. In these cases, however, faults existing at untested sensors or untested positions may be overlooked.

Further, this kind of problem is likely to arise not only in the optical fiber type collision detecting apparatus, but also in a longitudinal film type collision load sensor in which an electric resistance changes with the collision load.

EP 1 702 812 A1 discloses a collision detecting apparatus for vehicle and describes a testing thereof by preparing a bumper reinforcement member and a bumper part, arranging a collision load detecting device between the reinforcement member and the bumper, applying a predetermined test load to predetermined portions of the bumper at a plurality of positions and reading the signals outputted from the collision load detecting device.

The present invention is made in view of the above mentioned problems, less time consuming and it is an object of the present invention to provide a method of testing a collision load sensor for a vehicle less time consuming and with high accuracy and simple steps.

The collision load sensor has a collision load detecting device that is to be arranged between a bumper and a bumper reinforcement member and disposed to extend in a right and left direction of the vehicle, and a detecting circuit for detecting signals outputted from the collision load sensor and outputting electric signals corresponding to a collision load.

For the testing, first, a bumper reinforcement member equivalent part having a mechanical property equivalent to the bumper reinforcement member and a bumper equivalent part having a mechanical property equivalent to the bumper are prepared. Next, the collision load detecting device is interposed between the bumper reinforcement member equivalent part and the bumper equivalent part as in a similar position when actually mounted on the vehicle. Then, a predetermined test load is sequentially applied to predetermined portions of the bumper equivalent part in a direction corresponding to a front and rear direction of the vehicle. Further, the signals outputted from the collision load detecting device are read sequentially.

In this kind of collision load sensor, which is located between the bumper (including a load transmission plate) and the bumper reinforcement member, it is realized that the sensitivity of the sensor is determined by the collision load as well as a composed load transmission characteristic of the bumper, the bumper reinforcement member, the side members and the sensor itself.

Therefore, in the testing, the collision load detecting device is interposed between the bumper equivalent part having a load transmission characteristic similar to that of the bumper and the bumper reinforcement member equivalent part having a load transmission characteristic similar to that of the bumper reinforcement member as it is arranged in a similar condition as on an actual vehicle. Then, the test load is applied to the bumper equivalent part in the predetermined direction.

Namely, for the testing, it is not necessary to mount every collision load detecting device, e.g., an optical fiber unit, on a model vehicle that is the same type as a vehicle that the collision load sensor is actually mounted. Also, it is not necessary to carry out a sampling inspection or to reduce the number of testing points.

According to the method of the present invention, all products are tested through the simple steps. Accordingly, reliability of the vehicle collision load sensors to be shipped improves. Further, it is possible to individually adjust the sensitivity by using the test data: Therefore, the method enhances yield.

Other objects, features and advantages of the present invention will become more apparent from the following detailed description made with reference to the accompanying drawings, in which like parts are designated by like reference numbers and in which:
Fig. 1 is a schematic transparent plan view of a vehicle having a pedestrian collision sensor and a pedestrian protection apparatus;
Fig. 2 is an exploded perspective view of the pedestrian collision sensor mounted to a front bumper of the vehicle;
Fig. 3 is a schematic top view of the pedestrian collision sensor for showing arrangement thereof;
Fig. 4 is a schematic circuit diagram of the pedestrian collision sensor;
Fig. 5A is a horizontal cross-sectional view of an optical fiber unit of the pedestrian collision sensor;
Fig. 5B is a vertical cross-sectional view of the optical fiber unit;
Fig. 6 is a perspective view of a stress concentrating plate of the pedestrian collision sensor;
Fig. 7 is a cross-sectional view of a load transmission plate of the pedestrian collision sensor;
Fig. 8 is a schematic side view of a testing device for showing a first step of a test according to an example embodiment of the present invention;
Fig. 9 is a schematic side view of the testing device for showing a second step of the test according to the example embodiment of the present invention; and
Fig. 10 is a schematic side view of the testing device for showing a third step of the test according to the example embodiment of the present invention.

Hereafter, the example embodiment of the present invention will be described with reference to the drawings. In the example embodiment, an optical fiber type collision detecting apparatus for a vehicle protection apparatus is exemplary employed as the collision load sensor to be tested by a method of present invention. The present invention is not limited to the following embodiments, but can be implemented by combinations of conventional structural elements.

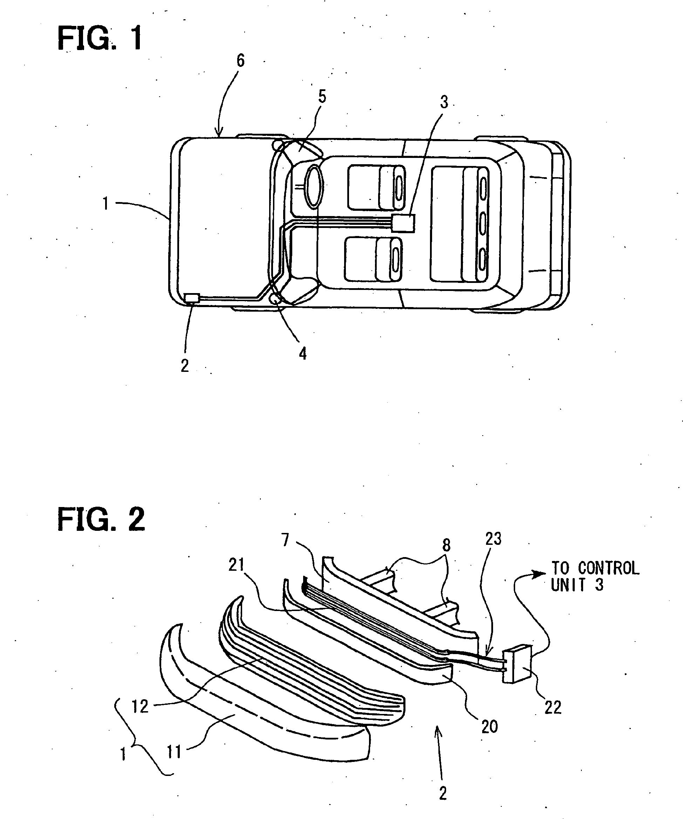

First, a general structure of the vehicle protection apparatus will be described with reference to Fig. 1. As shown in Fig. 1, the vehicle protection apparatus has the collision detecting apparatus (hereafter, referred to as pedestrian collision sensor) 2 for detecting a collision of a front bumper 1 with a collision object, e.g., a pedestrian, a pedestrian protection control unit 3, a pillar air bag expansion device 4, and a pillar air bag 5 for protecting the pedestrian. In Fig. 1, numeral 6 denotes a vehicle body.

The pedestrian protection control unit 3, the pillar air bag expansion device 4 and the pillar air bag 5 construct an air bag-type pedestrian protection apparatus for protecting the pedestrian, in particular, a head of the pedestrian, who may fall over a bonnet at the time of a collision. In Fig. 1, the pedestrian collision sensor 2 is schematically illustrated.

### (Structure of Pedestrian Collision Sensor 2)

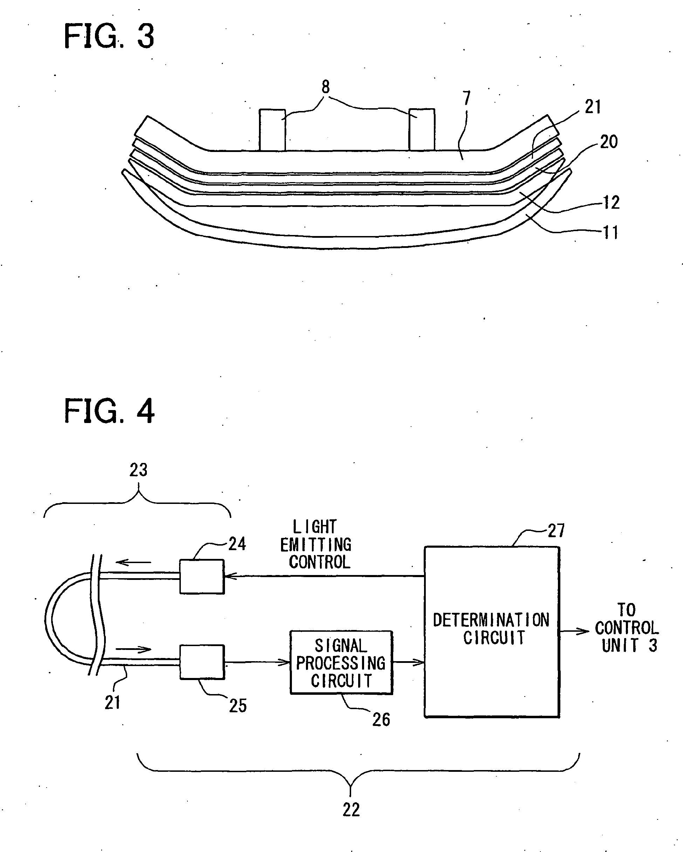

Referring to Figs. 2 and 3, the pedestrian collision sensor 2 includes a load transmission plate 20, an optical fiber unit 21, and a circuit unit 22. The load transmission plate 20 and the optical fiber unit 21 are disposed to extend in a right and left direction along a front surface of a bumper reinforcement member 7, between the front bumper 1 and the bumper reinforcement member 7. The front bumper 1 is composed of a bumper cover 11 and a bumper absorber 12 that is located on a rear side of the bumper cover 11. The front bumper 1 is located at a front part of the vehicle body 6.

Referring to Fig. 4, a circuit structure of the pedestrian collision sensor 2 is composed of the optical fiber unit 21, a light transmitting circuit 24, a light receiving circuit 25, a signal processing circuit 26, and a determination circuit 27. The light transmitting circuit 24 introduces light into the optical fiber unit 21 and the light receiving circuit 25 detects the light from the optical fiber unit 21. The signal processing circuit 26 converts a signal that is outputted from the light receiving circuit 25, into a digital signal after amplification.

The determination circuit 27 includes a microcomputer that processes the digital signal through a predetermined pedestrian discriminate routine, to thereby determine the collision of the pedestrian. When it is determined that the vehicle collided with the pedestrian, the determination circuit 27 informs the pedestrian protection control unit 3 of the collision of the pedestrian. The pedestrian protection control unit 3 instructs the pillar air bag expansion device 4 to expand the pillar air bag 5 based on the information. The determination circuit 27 controls the light transmitting circuit 24.

The circuit unit 22 accommodates the light transmitting circuit 24, the light receiving circuit 25, the signal processing circuit 26 and the determination circuit 27 therein. The circuit unit 22 is for example arranged at a front left part of the vehicle. The optical fiber unit 21, the light transmitting circuit 24, and the light receiving circuit 25 construct an optical fiber sensor 23.

The optical fiber unit 21 is arranged in a substantially U-shape along the front surface of the bumper reinforcement member 7, as shown in Fig. 2. For example, the optical fiber unit 21 extends from the circuit unit 22, and further extends from a left end to a right end of the bumper reinforcement member 7 along the front surface of the bumper reinforcement member 7. At the right end of the bumper reinforcement member 7, the optical fiber unit 21 turns downward and further extends to the left end of the bumper reinforcement member 7. Then, the optical fiber unit 21 returns to the circuit unit 22. The optical fiber unit 21 has an optical fiber therein. The structure of the optical fiber will be described later.

The light produced from the light transmitting circuit 24 passes through the optical fiber of the optical fiber unit 21. Then, the light is photo-converted into a detection signal voltage in the light receiving circuit 25. The detection signal voltage is amplified to a predetermined degree through a preamplifier of the signal processing circuit 26 and then converted into the digital signal through an A/D converter in the signal processing circuit 26. Then, the signal is sent to the determination circuit 27. Accordingly, an occurrence of the pedestrian collision is determined based on the digital signal in the determination circuit 27.

### (Structure of the Optical Fiber Unit 21)

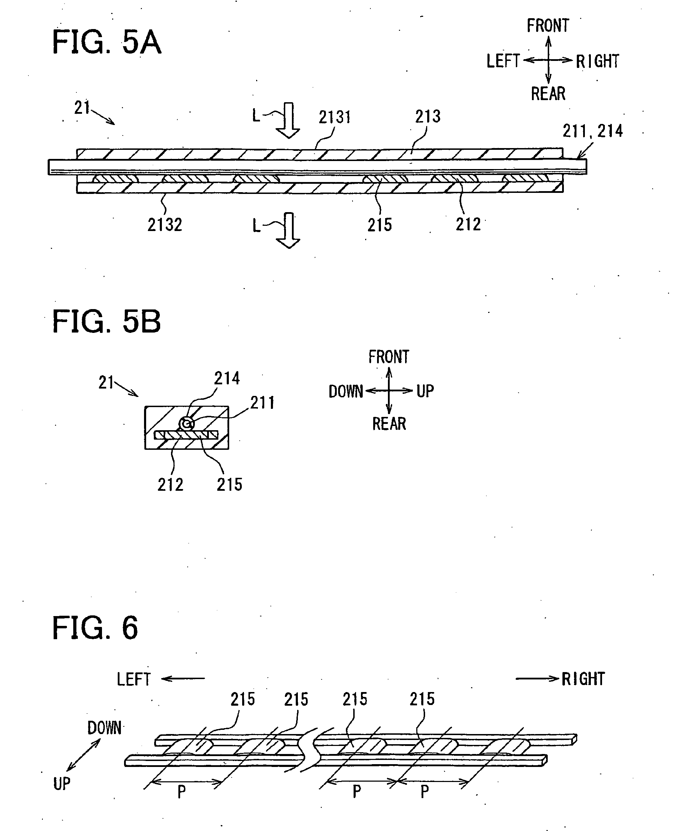

Referring to Figs. 5A and 5B, the optical fiber unit 21 has the optical fiber 211, a stress concentrating plate 212 and a silicone resin body 213. The optical fiber 211 extends in the right and left direction. The stress concentrating plate 212 is arranged vertically and extends in the right and left direction closely behind the optical fiber 211. The silicone resin body 213 embeds the optical fiber 211 and the stress concentrating plate 212 therein. The silicone resin body 213 has a rectangular-shaped vertical cross-section. The optical fiber 211 is covered with a rubber tube 214.

The optical fiber unit 21 is arranged such that a first wall (front wall) 2131 of the silicone resin body 213 contacts the rear wall of the load transmission plate 20 and a second wall (rear wall) 2132 of the silicone resin body 213 contacts the front wall of the bumper reinforcement member 7. Alternatively, the silicone resin body 213 can be disposed such that the first wall 2131 contacts the front wall of the bumper reinforcement member 7 and the second wall 2132 contacts the rear wall of the load transmission plate 20.

Further, a second stress concentrating plate, which has a shape similar to that of the stress concentrating plate 212, can be added on the opposite side as the stress concentrating plate 212, with respect to the optical fiber 211. In this case, it is preferable that rungs 215 (described later) of the stress concentrating plate 212 and the rungs of the second stress concentrating plate are staggered in the right and left direction. The structure of the optical fiber unit 21 is not limited to the structure illustrated in Figs. 5A and 5B.

### (Structure of the Stress Concentrating Plate 212)

The stress concentrating plate 212 is formed by punching a thin longitudinal metal plate and has a ladder shape including the plurality of vertical rungs (also referred to as raised portions) 215 at predetermined intervals P in the vehicle right and left direction. Each of the vertical rungs 215 contacts an outer circumferential surface of the rubber tube 214 and extends in the vertical direction.

### (Structure of the Load Transmission Plate 20)

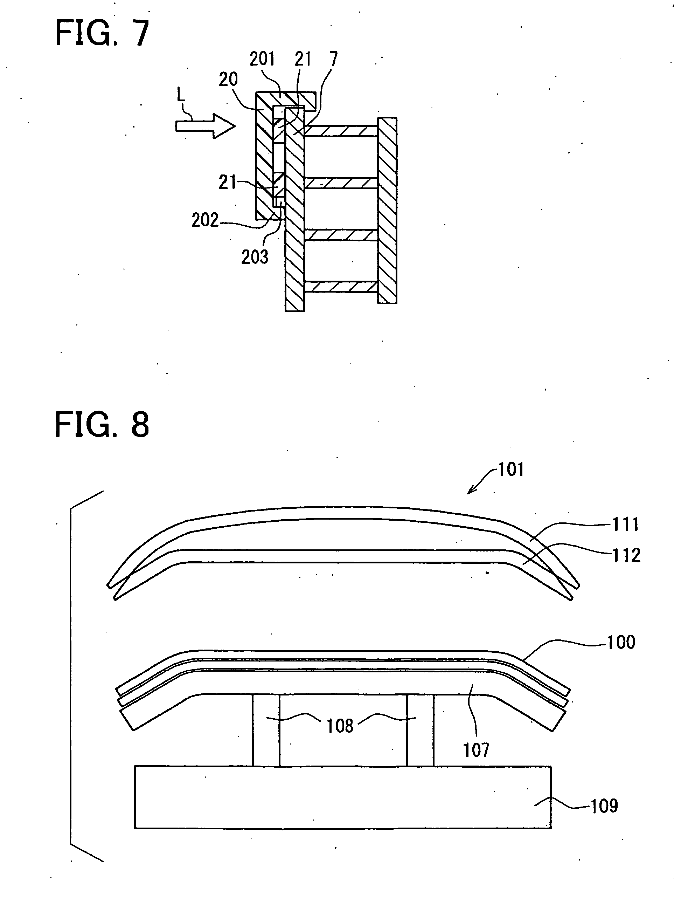

The structure of the load transmission plate 20 will be described with reference to Fig. 7. In the example embodiment, the load transmission plate 20 is molded with resin. The load transmission plate 20 is arranged in the vertical direction and extends in the right and left direction, between the bumper absorber 12 and the optical fiber unit 21 for transmitting the collision load L from the front bumper 1 to the optical fiber unit 21.

The optical fiber unit 21 is located between the rear surface of the load transmission plate 20 and the front surface of the bumper reinforcement member 7, and extends in the horizontal direction while contacting an upper half of the front surface of the bumper reinforcement member 7. In the example embodiment, the load transmission plate 20 is made of resin and has a substantially plate shape having rigidity higher than that of the bumper cover 11.

The load transmission plate 20 has an eave portion 210 and a projection 202. The eave portion 210 extends from the upper end of the load transmission plate 20 in a rear direction. The projection 202 extends from the lower end of the load transmission plate 20 in the rear direction. The rear end of the eave portion 201 bends downward to form a stopper portion.

On the front surface of the bumper reinforcement member 7, a projection 203 extends toward the load transmission plate 20, at a position under the optical fiber unit 21 and above the projection 202. The bottom wall of the eave portion 201 contacts the top wall of the bumper reinforcement member 7.

In this structure, an upward movement of the load transmission plate 20 is restricted because the projection 203 restricts an upward movement of the projection 202. Similarly, a downward movement of the load transmission plate 20 is restricted because the top wall of the bumper reinforcement member 7 restricts a downward movement of the eave portion 201. Accordingly, vertical movement of the load transmission plate 20 due to vertical vibration of the vehicle body is restricted with respect to the bumper reinforcement member 7.

The load transmission plate 20 is disposed such that the eave portion 201 is movable in the front and rear direction while sliding along the top wall of the bumper reinforcement member 7. Therefore, the load transmission plate 20 can sufficiently transmit the collision load L to the optical fiber unit 21.

In this case, if a length of the projection 202 in the rearward direction is short, the load transmission plate 20 is linearly movable in the rearward direction. If the length of the projection 202 in the rearward direction is long and the end of the projection 202 is in contact with the front surface of the bumper reinforcement member 7, the load transmission plate 20 rotates in a clockwise direction about the projection 202 as a rotation center.

In both cases, the load transmission plate 20 has the sufficient rigidity so that its deformation due to the collision load L is reduced. By this, the collision load L can be applied to a wide area of the longitudinal optical fiber unit 21 while suppressing partial deformation of the optical fiber unit 21.

### (Operation)

Next, a detecting operation of the above-described pedestrian collision sensor 2 will be described. When the front bumper 1 receives the collision load L in the substantially front and rear direction, the collision load L is transmitted to the optical fiber unit 21 through the load transmission plate 20. In the optical fiber unit 21, the collision load L is partly applied to the optical fiber 211 through the rungs 215 of the stress concentrating plate 212 because the silicone resin body 213 and the rubber tube 214 are easily elastically deformable. Therefore, the optical fiber 211 is bent at positions corresponding to the rungs 215 with positive correlation.

Thus, the quantity of light passing through the optical fiber 211 is decreased in accordance with the degree of the bents. Accordingly, in a case that a predetermined quantity of light is introduced to one end of the optical fiber 211 from the light transmitting circuit 214, the quantity of light transmitted to the light receiving circuit 25 from the opposite end of the optical fiber 211 correlates to the collision load. With this, the output signal from the light receiving circuit 25 changes with the intensity of the collision load.

The output of the light receiving circuit 25 is amplified and converted into the digital signal in the signal processing circuit 26. Then, the digital signal is compared to a predetermined threshold value in the determination circuit 27. Also in the determination circuit 27, the collision of the pedestrian is determined in the determination circuit 27 based on the compared result. When the collision of the pedestrian is determined, the pedestrian protection control unit 3 instructs the pillar air bag expansion device 4 to expand the pillar air bag 5.

The determination of the pedestrian based on the collision load can be made by using a map having multiple-threshold values. Also, the determination circuit 27 can be constructed of a hardware circuit such as a comparator. In this case, the A/D converter can be omitted.

### (Method of Load Applying Test and Structure of Testing Device)

The method of testing the above-described optical fiber sensor 23 will be described with reference to Figs. 8 to 10. For example, the optical fiber sensor 23 is shipped in a condition fixed to the load transmission plate 20, as shown in Fig. 7. Hereafter, a unit in which the optical fiber sensor 23 and the load transmission plate 20 are integrated is referred to as a sensor assembly 100. The sensor assembly 100 or the optical fiber sensor 23 may include the signal processing circuit 26 and the determination circuit 27.

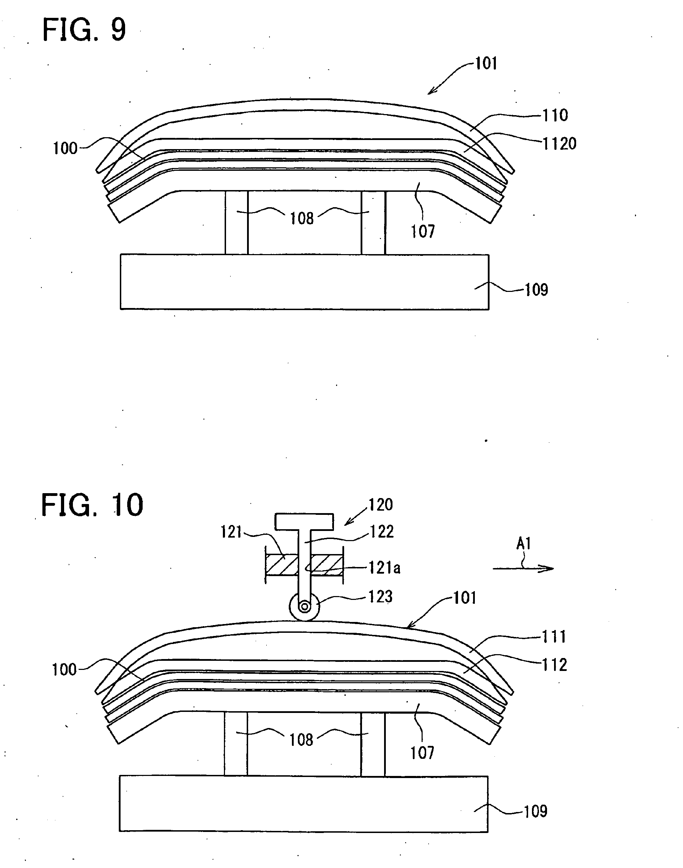

As shown in Fig. 10, the testing device includes a bed (stage) 109, a pair of side member equivalent parts 108, a bumper reinforcement member equivalent part 107, a front bumper equivalent part 101, a load applying device 120 and an auxiliary device (not shown) for operating the load applying device 120.

For example, the pair of side member equivalent parts 108 extends upward from a top wall of the bed 109. The bumper reinforcement member equivalent part 107 is horizontally fixed at the top ends of the side member equivalent parts 108. The front bumper equivalent part 101 is arranged above the bumper reinforcement member equivalent part 107. The load applying device 120 is located above the front bumper equivalent part 101.

The pair of side member equivalent parts 108 has a shape, a quality of material, and an arrangement same as those of the side members 8 of the actual vehicle. The actual bumper reinforcement member 7 and the actual front bumper 1 are used as the bumper reinforcement member equivalent part 107 and the front bumper equivalent part 101 to provide the same mechanical property. The front bumper equivalent part 101 includes a bumper cover equivalent part 111 and a bumper absorber equivalent part 112.

In the example embodiment, the front bumper equivalent part 101 is arranged such that its front face, which faces a front side when actually mounted to the vehicle, faces upward. However, it is not always necessary that the front bumper equivalent part 101 is arranged as above. Alternatively, the side member equivalent parts 108 can be arranged to extend in a horizontal direction from a side wall of the bed 109, as in a manner actually mounted to the vehicle. In this case, the front bumper equivalent part 101 is arranged such that the front face faces in the horizontal direction.

The load applying device 120 has a frame 121, a sliding rod 122, a load roller 123 and a cylinder (not shown). The frame 121 is formed with a through hole 121 a having a length in a direction perpendicular to the frame 121. The sliding rod 122 is received in the through hole 121 a with a clearance. The load roller 123 is held at the bottom end of the sliding rod 122 to be rotatable. The frame 121 is supported by the cylinder to be linearly movable in the horizontal direction. A flange is formed at the top end of the sliding rod 122, for restricting the sliding rod 122 from separating from the frame 122.

Here, the total weight of the sliding rod 122 and the load roller 123 is adjusted to a value in which a weight affected by the gravity of the front bumper equivalent part 101 is slightly subtracted from the test load to be applied to the sensor assembly 100. Because the weight of the front bumper equivalent part 101 is applied to the front surface of the sensor assembly 100, it is noted that the effect at the testing point is limited.

Next, a method of testing will be described. First, as shown in Fig. 8, the bumper reinforcement member equivalent part 101 is lifted for example by using a non-illustrated moving cylinder. Then, the sensor assembly 100 to be tested is set on the bumper reinforcement member equivalent part 107.

Next, as shown in Fig. 9, the front bumper equivalent part 101 is moved down and placed on the sensor assembly 100. At this time, a rod end of the non-illustrated moving cylinder separates downwardly from the front bumper equivalent part 101. Accordingly, only the weight of the front bumper equivalent part 101 is applied to the sensor assembly 100.

Next, the frame 121 of the load applying device 120 is linearly moved in a horizontal direction shown by an arrow A1 in Fig. 10. Namely, the load roller 123 is first placed on one end (left end in Fig. 10) of the top wall (front wall when mounted on the vehicle) of the front bumper equivalent part 101. Accordingly, the test load is applied to the left end of the sensor assembly by the weight of the load applying device 120 and the front bumper equivalent part 101. At this time, the sensor assembly 100 is operated. Thus, the light is introduced in the optical fiber 211, and the signal voltage from the light receiving circuit 25 is read. This operation is repeated while moving the load applying device 120 in the longitudinal direction A1 of the front bumper equivalent part 101.

As shown in Fig. 10, the top wall of the front bumper equivalent part 101 curves at the right and left ends thereof. Because the load roller 123 is guided to be movable in the up and down direction through the sliding rod 122, it moves to follow the curved shape of the front bumper equivalent part 101.

In the testing method of the present invention, the test load is applied by using the load roller 123 that is moved in the longitudinal direction of the front bumper equivalent part 101. Accordingly, the sensitivity the optical fiber unit 21 is detected with a very fine pitch in the longitudinal direction thereof in a short time. The test data of the sensor assembly 100 can be used to determine the quality and to adjust the sensitivity of the sensor assembly 100. A large amount of data is continuously collected by employing the load roller 123. Therefore, the time required to,the testing can be significantly saved.

For example, one of the quantity of light emitted from the light transmitting circuit 24 and an amplification factor of the light receiving circuit 25 can be adjusted based on the plural output signals sequentially obtained. Further, the sensitivity can be adjusted by adjusting both of the quantity of light and the amplification factor so that a zero point shift of the output value is compensated. Accordingly, the optical fiber sensors 23 have uniform sensitivity and the zero point shift is reduced. Here, the sensitivity adjustment by using the obtained plural output signals can be carried out by various ways.

For example, the sensitivity can be adjusted such that an average of the output signals is set to a predetermined target value. Further, the sensitivity can be adjusted such that one of a minimum value and a maximum value of each output signal is a predetermined target value.

In the structure that the collision sensor 2 is located between the front bumper 1 including the load transmission plate 20 and the bumper reinforcement member 7, the sensitivity of the optical fiber unit 21 is determined by the collision load L and a composed characteristic of a load transmission characteristic of the front bumper 1, a load transmission characteristic of the bumper reinforcement member 7 to the side member, and a load transmission characteristic of the optical fiber unit 2.

According to the testing method of the present invention, all products can be tested with simple steps in a short time, and the test can be carried out at many positions of the optical fiber unit 21. It is not necessary to mount every collision sensor 2 on a model vehicle that is the same type as a vehicle on which the collision sensor 2 is actually mounted. Also, it is not necessary to carry out a sampling inspection or to reduce the testing points. Therefore, the testing method of the present invention improves reliability of the vehicle collision load sensors to be shipped. Further, by using the test data, it is possible to individually adjust the sensitivity. Therefore, the method enhances yield.

In the above example embodiment, the front bumper equivalent part 101 is placed such that the front face that faces forward when mounted on the vehicle faces upward. Instead, the front bumper equivalent part 101 can be arranged in the horizontal direction in the similar manner as mounted on the actual vehicle. In this case, it is not necessary to take the effect of the weight of the front bumper equivalent part 101 into consideration. The load is applied in the horizontal direction by using the load roller 123. Instead of using the load roller 123, the test load can be applied in another method, e.g., in a conventional method.

In the above example embodiment, the load applying device 120 is moved in the horizontal direction. Alternatively, the bed 109 can be moved in the horizontal direction with respect to the load applying device 120.

In the above example embodiment, the load roller 123 is supported to be movable in the vertical direction. Alternatively, the load roller 123 can be fixed in the vertical direction and the bed 109 can be slightly moved in the vertical direction so that the load is generated at the load roller 123. Also in this case, the sensitivity of the longitudinal optical fiber unit 21 is detected with a very fine pith in a short time.

The above method is exemplary used to test the optical fiber sensor 2 arranged at the front part of the vehicle. The above method can be applied to test an optical fiber sensor arranged at a rear part of the vehicle for detecting bumps from a rear side of the vehicle. In this case, the optical fiber sensor is situated in a condition similar to be arranged at the rear part of the vehicle and the sensitivity of the optical fiber sensor is tested in a manner similar to the example embodiment shown in Figs. 8 to 10. Further, the above testing method is not limited to test the optical fiber sensor 23, but can be used to test another collision detecting sensor.

The preferred embodiment of the present invention is described above. However, the present invention is not limited to the above embodiments, but may be implemented in other ways without departing from the scope of the invention as defined in the claims.

## Claims

1. A method of testing a collision load sensor (2, 23) for a vehicle, the sensor (2, 23) having a collision load detecting device (211) to be arranged in a right and left direction of the vehicle between a bumper (1) and a bumper reinforcement member (7) and a detecting circuit (25) for detecting signals outputted from the collision load detecting device (211) and outputting electric signals corresponding to a collision load based on the signals of the collision load detecting device (211), the method comprising steps of:
preparing a bumper reinforcement member equivalent part (107) having a mechanical property equivalent to the bumper reinforcement member (7) and a bumper equivalent part (101) having a mechanical property equivalent to the bumper (1);
arranging the collision load detecting device (211) between the bumper reinforcement member equivalent part (107) and the bumper equivalent part (101);
applying a predetermined test load to predetermined portions of the bumper equivalent part (101) in a direction corresponding to a front and rear direction of the vehicle in due order;
reading the signals outputted from the collision load detecting device (211);and
wherein
the test load is applied by using a load applying device (120), and
the load applying device (120) has a load roller (123) that is rotatably moved in a longitudinal direction of the bumper equivalent part (101) while applying the test load to an outer surface of the bumper equivalent part (101).

2. A method of testing a collision load sensor (2, 23) for a vehicle, the sensor (2, 23) having a collision load detecting device (211) to be arranged in a right and left direction of the vehicle between a bumper (1) and a bumper reinforcement member (7) and a detecting circuit (25) for detecting signals outputted from the collision load detecting device (211) and outputting electric signals corresponding to a collision load based on the signals of the collision load detecting device (211), the method comprising steps of:
preparing a bumper reinforcement member equivalent part (107) having a mechanical property equivalent to the bumper reinforcement member (7) and a bumper equivalent part (101) having a mechanical property equivalent to the bumper (1);
arranging the collision load detecting device (211) between the bumper reinforcement member equivalent part (107) and the bumper equivalent part (101);
applying a predetermined test load to predetermined portions of the bumper equivalent part (101) in a direction corresponding to a front and rear direction of the vehicle in due order;
reading the signals outputted from the collision load detecting device (211); and
wherein
the test load is applied by using a load applying device (120),
the load applying device (120) has a load roller (123) for applying the test load to an outer surface of the bumper equivalent part (101) and a stage (109) for supporting the bumper reinforcement member equivalent part (107), the collision load detecting device (211), and the bumper equivalent part (101) thereon, and
the stage (109) is moved in a longitudinal direction of the collision load detecting device (211).

3. The method according to claim 1 or 2, wherein
the collision load sensor (2, 23) includes an optical fiber (211) as the collision load detecting device, a light transmitting circuit (24) for introducing light into the optical fiber (211) and a light receiving circuit (25) as the detecting circuit.

4. The method according to one of the claims 1 to 3, wherein
the bumper reinforcement member equivalent part (107) is arranged in a substantially horizontal direction on a side member equivalent part (108) that has a mechanical property equivalent to a side member (8) of the vehicle, and
the test load is applied to the bumper equivalent part (101) in a vertical direction.

5. The method according to any one of claims 2 to 4, further comprising a step of adjusting one of a quantity of light produced by the light transmitting circuit (24) and an amplification factor of the light receiving circuit (25), based on the output signals.

## Patentansprüche

1. Verfahren zum Testen eines Kollisionslastsensors (2, 23) für ein Fahrzeug, wobei der Sensor (2, 23) eine Kollisionslasterfassungsvorrichtung (211), die rechts und links des Fahrzeugs zwischen einem Stoßfänger (1) und einem Stoßfängerverstärkungselement (7) angeordnet sein soll, und einen Erfassungsschaltkreis (25) zum Erfassen von aus der Kollisionslasterfassungsvornchtung (211) ausgegebenen Signalen und zum Ausgeben von einer Kollisionslast entsprechenden elektrischen Signalen basierend auf den Signalen der Kollisionslasterfassungsvorrichtung (211) aufweist, wobei das Verfahren folgende Schritte beinhaltet:
Bereitstellen eines dem Stoßfängerverstärkungselement entsprechenden Teils (107), das eine mechanische Eigenschaft aufweist, die dem Stoßfängerverstärkungselement (7) entspricht, und eines dem Stoßfänger entsprechenden Teils (101), das eine mechanische Eigenschaft aufweist, die dem Stoßfänger (1) entspricht;
Anordnen der Kollisionslasterfassungsvorrichtung (211) zwischen dem dem Stoßfängerverstärkungselement (107) entsprechenden Teil (107) und dem dem Stoßfänger entsprechenden Teil (101);
Aufbringen einer vorbestimmten Testlast auf vorbestimmte Bereiche des dem Stoßfänger entsprechenden Teils (101) in einer Richtung, die einer Front- und Heckrichtung des Fahrzeugs entspricht, in angemessener Reihenfolge;
Messen der Signale, die von der Kollisionslasterfassungsvorrichtung (211) ausgegeben werden; und
wobei
die Testlast durch Verwendung einer Lastaufbringungsvorrichtung (120) aufgebracht wird, und
die Lastaufbringungsvorrichtung (120) eine Lastwalze (123) aufweist, die in einer Längsrichtung des dem Stoßfänger entsprechenden Teils (101) drehbar bewegt wird, während die Testlast auf eine Außenoberfläche des dem Stoßfänger entsprechenden Teils (101) aufgebracht wird.

2. Verfahren zum Testen eines Kollisionslastsensors (2, 23) für ein Fahrzeug, wobei der Sensor (2, 23) eine Kollisionslasterfassungsvorrichtung (211), die rechts und links des Fahrzeugs zwischen einem Stoßfänger (1) und einem Stoßfängerverstärkungselement (7) angeordnet ist, und einen Erfassungsschaltkreis (25) zum Erfassen von aus der Kollisionslasterfassungsvornchtung (211) ausgegebenen Signalen und zum Ausgeben von einer Kollisionslast entsprechenden elektrischen Signalen basierend auf den Signalen der Kollisionslasterfassungsvorrichtung (211) aufweist, wobei das Verfahren folgende Schritte beinhaltet:
Bereitstellen eines dem Stoßfängerverstärkungselement entsprechenden Teils (107), das eine mechanische Eigenschaft aufweist, die dem Stoßfängerverstärkungselement (7) entspricht, und eines dem Stoßfänger entsprechenden Teils (101), das eine mechanische Eigenschaft aufweist, die dem Stoßfänger (1) entspricht;
Anordnen der Kollisionslasterfassungsvornchtung (211) zwischen dem dem Stoßfängerverstärkungselement (107) entsprechenden Teil (107) und dem dem Stoßfänger entsprechenden Teil (101);
Aufbringen einer vorbestimmten Testlast auf vorbestimmte Bereiche des dem Stoßfänger entsprechenden Teils (101) in einer Richtung, die einer Front- und Heckrichtung des Fahrzeugs entspricht, in angemessener Reihenfolge;
Messen der Signale, die von der Kollisionslasterfassungsvorrichtung (211) ausgegeben werden; und
wobei
die Testlast durch Verwendung einer Lastaufbringungsvorrichtung (120) aufgebracht wird, und
die Lastaufbringungsvorrichtung (120) eine Lastwalze (123) zum Aufbringen der Testlast auf eine Außenoberfläche des dem Stoßfänger entsprechenden Teils (101) und ein Gestell (109) zum Halten des dem Stoßfängerverstärkungselement entsprechenden Teils (107), der Kollisionslasterfassungsvorrichtung (211) und des dem Stoßfänger entsprechenden Teils (101) aufweist, und
das Gestell (109) in einer Längsrichtung der Kollisionslasterfassungsvornchtung (211) bewegt wird.

3. Verfahren nach Anspruch 1 oder 2, wobei
der Kollisionslastsensor (2, 23) eine optische Faser (211) als die Kollisionslasterfassungsvorrichtung, einen Lichtübertragungsschaltkreis (24) zum Einführen von Licht in die optische Faser (211) und einen Lichtempfangsschaltkreis (25) als den Erfassungsschaltkreis beinhaltet.

4. Verfahren nach einem der Ansprüche 1 bis 3, wobei
das dem Stoßfängerverstärkungselement entsprechende Teil (107) in einer im Wesentlichen horizontalen Richtung auf einem einem Seitenelement entsprechenden Teil (108) angeordnet ist, das eine mechanische Eigenschaft aufweist, die einem Seitenelement (8) des Fahrzeugs entspricht, und
die Testlast auf das dem Stoßfänger entsprechende Teil (101) in einer vertikalen Richtung ausgeübt wird.

5. Verfahren nach einem der Ansprüche 2 bis 4, ferner beinhaltend einen Schritt zum Einstellen von entweder einer Menge des Lichts, das durch den Lichtübertragungsschaltkreis (24) erzeugt wird, oder eines Verstärkungsfaktors des Lichtempfangsschaltkreises (25), basierend auf den Ausgangsignalen.

## Revendications

1. Procédé permettant de tester un capteur (2, 23) de charge de collision pour un véhicule, le capteur (2, 23) ayant un dispositif (211) de détection de charge de collision qui doit être agencé dans une direction droite et gauche du véhicule entre un pare-chocs (1) et un élément (7) de renfort de pare-chocs et un circuit de détection (25) destiné à détecter des signaux délivrés en sortie à partir du dispositif (211) de détection de charge de collision et à délivrer en sortie des signaux électriques correspondant à une charge de collision sur la base des signaux du dispositif (211) de détection de charge de collision, le procédé comprenant les étapes qui consistent:
à préparer une partie équivalente (107) à l'élément de renfort de pare-chocs ayant une propriété mécanique équivalente à l'élément (7) de renfort de pare-chocs et une partie équivalente (101) au pare-chocs ayant une propriété mécanique équivalente au pare-chocs (1) ;
à agencer le dispositif (211) de détection de charge de collision entre la partie équivalente (107) à l'élément de renfort de pare-chocs et la partie équivalente (101) au pare-chocs ;
à appliquer une charge d'essai prédéterminée à des parties prédéterminées de la partie équivalente (101) au pare-chocs dans une direction correspondant à une direction avant et arrière du véhicule dans l'ordre voulu ;
à lire les signaux délivrés en sortie à partir du dispositif (211) de détection de charge de collision ; et
où
la charge d'essai est appliquée en utilisant un dispositif (120) d'application de charge, et
le dispositif (120) d'application de charge comprend un rouleau de charge (123) qui est déplacé en rotation dans une direction longitudinale de la partie équivalente (101) au pare-chocs tout en appliquant la charge d'essai à une surface extérieure de la partie équivalente (101) au pare-chocs.

2. Procédé permettant de tester un capteur (2, 23) de charge de collision pour un véhicule, le capteur (2, 23) ayant un dispositif (211) de détection de charge de collision qui doit être agencé dans une direction droite et gauche du véhicule entre un pare-chocs (1) et un élément (7) de renfort de pare-chocs et un circuit de détection (25) destiné à détecter des signaux délivrés en sortie à partir du dispositif (211) de détection de charge de collision et à délivrer en sortie des signaux électriques correspondant à une charge de collision sur la base des signaux du dispositif (211) de détection de charge de collision, le procédé comprenant les étapes qui consistent:
à préparer une partie équivalente (107) à l'élément de renfort de pare-chocs ayant une propriété mécanique équivalente à l'élément (7) de renfort de pare-chocs et une partie équivalente (101) au pare-chocs ayant une propriété mécanique équivalente au pare-chocs (1) ;
à agencer le dispositif (211) de détection de charge de collision entre la partie équivalente (107) à l'élément de renfort de pare-chocs et la partie équivalente (101) au pare-chocs ;
à appliquer une charge d'essai prédéterminée à des parties prédéterminées de la partie équivalente (101) au pare-chocs dans une direction correspondant à une direction avant et arrière du véhicule dans l'ordre voulu ;
à lire les signaux délivrés en sortie à partir du dispositif (211) de détection de charge de collision ; et
où
la charge d'essai est appliquée en utilisant un dispositif (120) d'application de charge,
le dispositif (120) d'application de charge comprend un rouleau de charge (123) destiné à appliquer la charge d'essai à une surface extérieure de la partie équivalente (101) au pare-chocs et un étage (109) destiné à supporter la partie équivalente (107) à l'élément de renfort de pare-chocs, le dispositif (211) de détection de charge de collision, et la partie équivalente (101) au pare-chocs dessus, et
l'étage (109) est déplacé dans une direction longitudinale du dispositif (211) de détection de charge de collision.

3. Procédé selon la revendication 1 ou 2, dans lequel le capteur (2, 23) de charge de collision comporte une fibre optique (211) comme étant le dispositif de détection de charge de collision, un circuit (24) de transmission de lumière destiné à introduire la lumière dans la fibre optique (211) et un circuit (25) de réception de lumière comme étant le circuit de détection.

4. Procédé selon l'une des revendications 1 à 3, dans lequel
la partie équivalente (107) à l'élément de renfort de pare-chocs est agencée dans une direction sensiblement horizontale sur une partie équivalente (108) à un élément latéral qui a une propriété mécanique équivalente à un élément latéral (8) du véhicule, et
la charge d'essai est appliquée à la partie équivalente (101) au pare-chocs dans une direction verticale.

5. Procédé selon l'une quelconque des revendications 2 à 4, comprenant en outre une étape qui consiste à régler l'une d'une quantité de lumière produite par le circuit (24) de transmission de lumière et d'un facteur d'amplification du circuit (25) de réception de lumière, sur la base des signaux de sortie.
